# EUROPÄISCHE PATENTSCHRIFT

(11) **EP 0 263 960 B1**
(45) Veröffentlichungstag und Bekanntmachung des Hinweises auf die Patenterteilung: **18.11.1993**
(21) Anmeldenummer: 87112896.3
(22) Anmeldetag: 03.09.1987
(51) Int. Cl.: H04J 3/06

(54) **Schaltungsanordnung zum Übertragen von Datensignalen**
Circuitry for the transmission of data signals
Circuit de transmission de signaux de données

(30) Priorität: 09.09.1986 DE 3630699
(43) Veröffentlichungstag der Anmeldung: 20.04.1988
(73) Patentinhaber: SIEMENS AKTIENGESELLSCHAFT, 80333 München (DE)
(72) Erfinder: Haberer, Herbert, Dipl.-Ing.(FH), D-8000 München 40 (DE)

(56) Entgegenhaltungen:
- US-A- 4 054 747
- PATENT ABSTRACTS OF JAPAN, Band 10, Nr. 121 (E-401)[2178], 7. Mai 1986 & JP-A-60 254 939

## Beschreibung

Die Erfindung betrifft eine Schaltungsanordnung zum Übertragen von Datensignalen, mit einer Speicheranordnung, welche die Datensignale bildende Datensignalbits zu durch das Auftreten von Impulsen einer ersten Taktimpulsfolge festgelegten Einschreibzeitpunkten aufnimmt und welche die Datensignalbits zu durch das Auftreten von Impulsen einer zweiten Taktimpulsfolge festgelegten Auslesezeitpunkten wieder abgibt, und mit einer Überwachungseinrichtung, welche bei Auftreten einer bestimmten Abweichung der Einschreibzeitpunkte für die einzelnen Datensignalbits von den diesen Einschreibzeitpunkten jeweils zugeordneten Auslesezeitpunkten ein Steuersignal für eine solche Änderung der Auslese- bzw. Einschreibzeitpunkte abgibt, daß der gewünschte zeitliche Abstand zwischen diesen Zeitpunkten wieder herbeigeführt wird.

Es ist bereits eine Schaltungsanordnung zum Ausgleich von Laufzeitänderungen bei der Übertragung von Zeitmultiplex-Nachrichtensignalen von einer Nachrichtensignal-Sendestelle zu einer Nachrichtensignal-Empfangsstelle hin bekannt (DE-AS 1 904 591). Diese bekannte Schaltungsanordnung weist wenigstens zwei Zwischenspeicher auf, die während der Dauer der Zeitfächer des auf der Übertragungsstrecke benutzten Zeitfächerrasters zyklisch aufeinanderfolgend zur Einspeicherung der der Nachrichtensignal-Empfangsstelle zugeführten Nachrichtensignale und während der Dauer der Zeitfächer des in der Nachrichtensignal-Empfangsstelle für die Weiterleitung von Nachrichtensignalen benutzten Zeitfächerrasters zyklisch aufeinanderfolgend zur Ausspeicherung der jeweiligen Nachrichtensignale wirksam gesteuert werden. Außerdem weist die bekannte Schaltungsanordnung Überwachungseinrichtungen auf, die bei Auftreten einer bestimmten Abweichung des Zeitpunktes der Einspeicherung der Nachrichtensignale in einen bestimmen Zwischenspeicher bezogen auf den Zeitpunkt der Ausspeicherung von Nachrichtensignalen aus einem anderen Zwischenspeicher ein Steuersignal für eine solche relative Änderung des Einspeicherzeitpunktes zu dem Ausspeicherzeitpunkt von Nachrichtensignalen abgeben, daß der gewünschte zeitliche Abstand zwischen diesen Zeitpunkten wieder herbeigeführt wird. Für ihr Wirksamschalten sind die Zwischenspeicher eingangsseitig und ausgangsseitig jeweils mit Schalteranordnungen verbunden, die für das Einspeichern bzw. Ausspeichern von Nachrichtensignalen zyklisch Einschreib- bzw. Auslesesignale zugeführt erhalten. Festgelegte Einschreib- und Auslesesignale werden dabei von den genannten, als Vergleicheranordnungen ausgebildeten Überwachungseinrichtungen hinsichtlich ihres zeitlichen Abstandes überwacht. Treten dabei Abweichungen auf, so geben die Überwachungseinrichtungen Steuersignale an einen die Auslesesignale bereitstellenden Taktgenerator ab, der auf solche Steuersignale hin hinsichtlich ihrer Phasenlage veränderte Auslesesignale bereitstellt. Ein derartiger steuerbarer Taktgenerator erfordert jedoch einen hohen, für allgemeine Anwendungsfälle zuweilen unerwünschten schaltungstechnischen Aufwand.

Es ist nun Aufgabe der vorliegenden Erfindung, einen Weg zu zeigen, wie bei einer Schaltungsanordnung der eingangs genannten Art Abweichungen zwischen Einschreib- und Auslesezeitpunkten mit einem relativ geringen schaltungstechnischen Aufwand ausgeglichen werden können.

Gelöst wird die vorstehend aufgezeigte Aufgabe bei einer Schaltungsanordnung der eingangs genannten Art erfindungsgemäß dadurch, daß die Speichereinrichtung, gesteuert durch die genannten Impulse der beiden Taktimpulsfolgen, parallel zu den Datensignalbits ein von der Überwachungseinrichtung periodisch wiederholt bereitgestelltes Prüfbit vorgegebenen Binärzustandes aufnimmt und zusammen mit diesen Datensignalbits wieder abgibt, daß die Überwachungseinrichtung bei ihrer Initialisierung die Abgabe von zuvor in die Speicheranordnung aufgenommenen Datensignalbits und Prüfbits derart verzögert freigibt, daß im Anschluß daran zwischen den in die Speicheranordung aufgenommenen und abgegebenen Prüfbits eine dem genannten zeitlichen Abstand zwischen den Einschreibzeitpunkten und den diesen jeweils zugeordneten Auslesezeitpunkten für Datensignalbits entsprechende Phasenbeziehung besteht und daß die Überwachungseinrichtung bei Überschreiten einer bestimmten vorgegebenen Änderung dieser Phasenbeziehung durch Abgabe des genannten Steuersignals ein solches zeitlich begrenztes Sperren der Speicheranordnung hinsichtlich der Abgabe von Datensignalbits und Prüfbits bewirkt, daß sich die gewünschte Phasenbeziehung zwischen aufgenommenen und abgegebenen Prüfbits zumindest annähernd wieder einstellt.

Der Vorteil der Erfindung besteht darin, daß anhand der parallel zu den Datensignalbits in die Speicheranordnung eingeschriebenen Prüfbits eine von der gerade in die Übertragung von Datensignalen einbezogenen Speicheranordnung unabhängige Überwachung der Einschreib - und Auslesevorgänge möglich ist. Auf diese Weise können beispielsweise in eine Übertragung von Datensignalen auch Speicheranordnungen einbezogen werden, deren Einschreib- und Auslesevorgänge steuernde Einrichtungen für Überwachungszwecke nicht zugänglich sind.

Ein weiterer Vorteil der Erfindung besteht in der Art des Ausgleichs von Änderungen der Einschreib- und Auslesezeitpunkte. Da derartige Änderungen durch gezieltes Sperren der Speicheranordnung hinsichtlich des Auslesens von Datensignalbits ausgeglichen werden, sind für die Steuerung von Einschreib- und Auslesevorgängen Taktgeneratoren verwendbar, die in ihrer Phalage nicht steuerbare Impulsfolgen bereitstellen. Derartige Taktgeneratoren sind gegenüber den beim Stand der Technik vorgesehenen steuerbaren Taktgeneratoren mit einem wesentlich geringeren schaltungstechnischen Aufwand realisierbar.

Hinsichtlich des schaltungstechnischen Aufwandes besonders vorteilhafte Ausgestaltungen der Überwachungseinrichtung und der Speicheranordnung ergeben sich aus den Unteransprüchen.

Im folgenden wird die Erfindung anhand von Zeichnungen beispielsweise näher beschrieben.
- Fig. 1: zeigt eine Schaltungsanordnung, bei der die Erfindung angewandt ist, und
- Figuren 2 bis 4: zeigen jeweils Impulsdiagramme, auf die im Zuge der Beschreibung der Erfindung eingegangen wird.

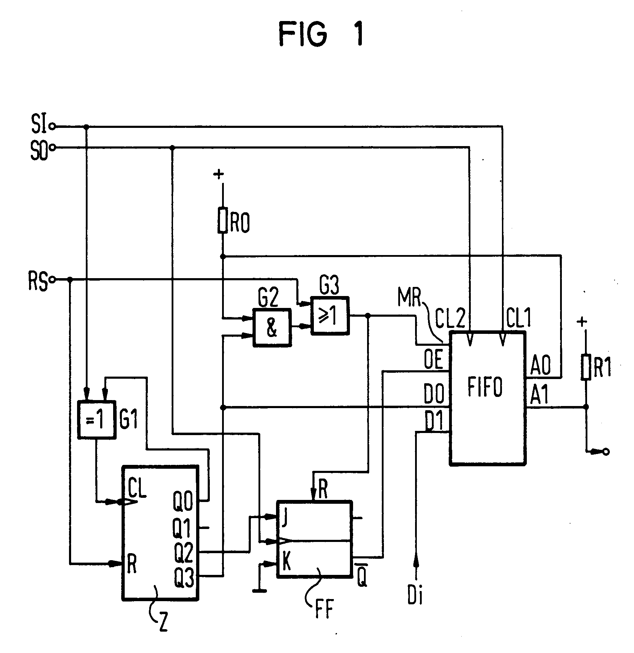

In FIG 1 ist eine in Datenübertragungseinrichtungen einsetzbare Schaltungsanordnung dargestellt, die mit einer ersten Taktimpulsfolge auftretende Datensignale aufnimmt und diese mit Hilfe einer zweiten Taktimpulsfolge weiterleitet. Dies kann beispielswseise dann erforderlich sein, wenn auf einer Übertragungsleitung entsprechend einem festgelegten Übertragungstakt auftretende, die Datensignale bildende Datensignalbits in der jeweiligen Datenübertragungseinrichtung mit einem internen Takt weiterzuleiten sind.

Die in FIG 1 dargestellte Schaltungsanordnung weist eine Speicheranordnung FIFO in Form eines Durchlaufspeichers auf. Derartige Durchlaufspeicher sind auch unter der Bezeichnung First-In-First-Out-Speicher bekannt. Dieser Durchlaufspeicher, bei dem es sich beispielsweise um einen von der Firma RCA unter der Bezeichnung CD 40 105B angebotenen Speicherbaustein handeln möge, weist zwei Takteingänge CL1 und CL2 auf. Über den Takt-eingang CL1 erhält er für das Einschreiben von ihm zugeführten Eingangsignalen Eingangstaktimpulse SI und für das Auslesen von ihm zuvor zugeführten Eingangssignalen Ausgangstaktimpulse SO zugeführt. Für das Einschreiben der Eingangssignale stehen dabei zwei Datensignaleingänge DO und D1 zur Verfügung. Im vorliegenden Fall kommen als Eingangssignale die über den Durchlaufspeicher weiterzuleitenden Datensignalbits und Prüfbits in Frage. Auf diese Prüfbits wird im folgenden noch näher eingegangen. Die Datensignalbits treten dabei am Datensignaleingang D1 und die Prüfbits am Datensignaleingang DO auf. Über die beiden Datensignaleingänge aufgenommene Datensignalbits und Prüfbits werden über mit AO und A1 bezeichnete Datensignalausgänge wieder ausgelesen. Mit der gleichen Ziffer bezeichnete Datensignalein- und Ausgänge sind dabei einander zugeordnet. D. h. die in den Durchlaufspeicher aufgenommenen Datensignalbits treten am Datensignalausgang A1 und die Prüfbits am Datensignalsusgang AO wieder auf.

Der Durchlaufspeicher FIFO weist außerdem zwei mit MR und OE bezeichnete Steuereingänge auf. Über den Steuereingang MR ist der Durchlaufspeicher auf ein entsprechendes Steuersignal hin in einen definierten Ausgangszustand überführbar. Über den Steuereingang OE ist er dagegen hinsichtlich des Auslesens von in ihm gespeicherten Signalen in einen Sperrzustand überführbar. In diesem Sperrzustand ist die Aufnahme von Ausgangstaktimpulsen SO unterbrochen. In diesem Sperrzustand werden außerdem bei dem obengenannten Speichertyp (CD 40 105B) die als sogenannte "Tristate"-Ausgänge ausgebildeten Ausgänge in ihren hochohmigen Zustand gesteuert.

Mit der zuvor erläuterten Speicheranordnung FIFO ist eine Überwachungseinrichtung verbunden. Diese Überwachungseinrichtung besteht aus einer Freigabeeinrichtung und einer mit dieser verbundenen Vergleicheranordnung. Der Freigabeeinrichtung ist dabei ein Zähler Z zugehörig. Bei diesem Zähler handelt es sich um einen rücksetzbaren Vier-Bit-Zähler. Diesen vier Bits sind dabei mit QO bis Q3 bezeichnete Zählerausgänge zugeordnet. Der Zählerausgang QO führt dabei das niederwertigste Bit. Die Wertigkeit der einzelnen Bits nimmt dann mit steigender Ziffer zu.

Der Zähler Z ist eingangsseitig einerseits über einen Rücksetzeingang R mit einer Rücksetzleitung RS verbunden. Andererseits ist ein Takteingang CL dieses Zählers an den Ausgang eines Exklusiv-ODER-Gliedes G1 angeschlossen. An einem seiner Eingänge erhält dieses Exklusiv-ODER-Glied die bereits erwähnten Eingangstaktimpulse SI zugeführt. Ein weiterer Eingang steht mit dem Zählerausgang QO in Verbindung. Der mit Q2 bezeichnete Zählerausgang ist dagegen mit dem J-Eingang einer mit der Ausgangstaktimpulsfolge SO angsteuerten JK-Kippstufe FF verbunden. Der K-Eingang dieser Kippstufe ist fest auf Massepotential gelegt. Der die Ausgangssignale negierende Ausgang Q̅ ist an den bereits erwähnten Steuereingang OE des Durchlaufspeichers FIFO angeschlossen.

Der mit Q3 bezeichnete Zählerausgang des Zählers Z steht einerseits mit dem bereits genannten Datensignaleingang DO und andererseits mit einem Eingang eines der bereits genannten Vergleicheranordnung zugehörigen UND-Gliedes G2 in Verbindung. Ein weiterer Eingang dieses UND-Gliedes ist an den Ausgang AO des Durchlaufspeichers FIFO angeschlossen. Der Ausgang dieses UND-Gliedes ist mit einem Eingang eines ODER-Gliedes G3 verbunden. An einem weiteren Eingang ist die bereits genannte Rücksetzleitung RS herangeführt. Ausgangsseitig ist dieses ODER-Glied einerseits mit dem Steuereingang MR des Durchlaufspeichers FIFO und andererseits mit einem Rücksetzeingang R der Kippstufe FF verbunden.

Die Ausgänge AO und A1 des Durchlaufspeichers FIFO sind jeweils über einen hochohmigen Widerstand RO bzw. R1 auf ein positives Potential gelegt. Durch diese Widerstände wird bei Verwendung des obengenannten Speicherbausteines erreicht, daß im Sperrzustand des Durchlaufspeichers an den "Tristate"-Ausgängen AO und A1 ein definiertes, einem Logisch-l-Pegel entsprechendes Potential auftritt. Bei Verwendung von Speicherbausteinen, die über keine "Tristate"-Ausgänge verfügen, können die beiden Widerstände entfallen.

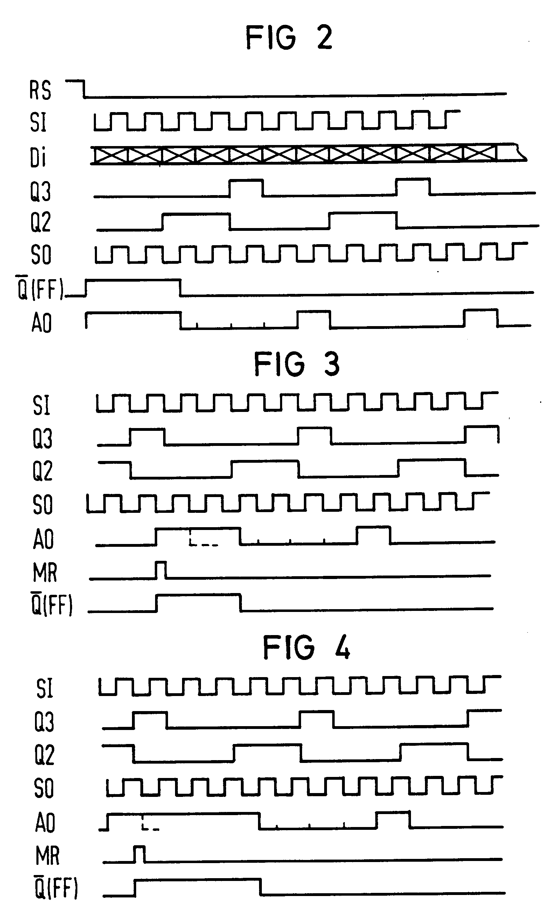

Nachdem zuvor der Aufbau der in FIG 1 dargestellten Schaltungsanordnung beschrieben worden ist, wird nunmehr unter Bezugnahme auf die Figuren 2 bis 4 die Wirkungsweise dieser Schaltungsanordnung näher erläutert. Die FIG 2 zeigt dabei ein Impulsdiagramm für die Initialisierungsphase der in FIG 1 dargestellten Schaltungsanordnung. Als Eingangssignale sind dargestellt ein auf der Leitung RS auftretendes Rücksetzsetzsignal, die am Datensignaleingang DI des Durchlaufspeichers FIFO auftretenden Datensignalbits und die Eingangs- und Ausgangstaktimpulsfolgen SI und SO. Die Impulse dieser Taktimpulsfolgen mögen dabei in ihrer Frequenz und Phase gleich sein. Weiterhin sind in FIG 2 dargestellt die an den beiden Zählerausgängen Q2 und Q3, die an dem Ausgang Q̅ der Kippstufe FF sowie die an dem Ausgang AO des Durchlaufspeichers FIFO auftretenden Signale.

In den Figuren 3 und 4 ist jeweils ein Impulsdiagramm für den Fall dargestellt, daß zwischen den Impulsen der Eingangs- und Ausgangstaktimpulsfolgen SI und SO ein Phasenunterschied besteht. Dargestellt sind dabei jeweils wieder die Eingangs-und Ausgangstaktimpulsfolgen SI und SO, die an den Zählerausgängen Q2 und Q3, die am Ausgang Q̅ der Kippstufe FF und am Ausgang AO des Durchlaufspeichers FIFO auftretenden Signale. Darüber hinaus ist in den beiden Figuren noch jeweils ein Signal dargestellt, das am Steuereingang MR des Durchlaufspeichers FIFO anliegt.

Im folgenden wird nun zunächst die Initialisierungsphase der in FIG 1 dargestellten Schaltungsanordnung näher betrachtet.

Bei Auftreten eines Rücksetzsignals in Form eines Logisch-l-Impulses werden der Zähler Z, die Kippstufe FF und der Durchlaufspeicher FIFO jeweils in ihren Anfangszustand überführt. In diesem Anfangszustand geben die beiden Zählerausgänge Q2 und Q3 jeweils einen Logisch-O-Pegel ab, während am Ausgang Q̅ der Kippstufe FF ein Logisch-l-Pegel anliegt. Dieser Logisch-l-Pegel bewirkt, daß der Durchlaufspeicher FIFO in seinen Sperrzustand überführt ist, in dem er an seinen Ausgängen AO und A1 jeweils einen Logisch-l-Pegel abgibt.

Mit dem Auftreten der rückwärtigen Flanke des Rücksetzimpulses startet der Zähler Z, gesteuert durch die ihm zugeführte Eingangstaktimpulsfolge SI, seinen Zählbetrieb. Während dieses Zählbetriebes gibt er an seinem Zählerausgang Q2 periodisch wiederholt Logisch-l-Impulse mit einem Impuls-Pausen-Verhältnis von 2:3 ab. Die Logisch-l-Pegel dieser Impulse werden als Freigabesignale für den Durchlaufspeicher FIFO benutzt. Am Zählerausgang Q3 treten dagegen Logisch-l-Impulse mit einem Impuls-Pausen-Verhältnis von 1:4 auf. Die Logisch-l-Pegel dieser Impulse entsprechen jeweils der Länge eines in den Durchlaufspeicher FIFO aufzunehmenden Datensignalbits und treten gleichzeitig mit einem solchen Datensignalbit auf. Diese Logisch-l-Pegel werden als Prüfbits für den Durchlaufspeicher FIFO benutzt. Bei dem angegebenen Impuls-Pausen-Verhältnis von 1:4 tritt somit mit jedem fünften Datensignalbit ein Prüfbit auf. Die Prüfbits und die zuvor genannten Freigabesignale weisen im übrigen dieselbe Periode auf. Die Vorderflanke der Prüfbits fällt dabei mit der rückwärtigen Flanke der Freigabesignale zusammen.

Nach dem Auftreten der rückwärtigen Flanke des Rücksetzimpulses werden die an dem Datensignaleingang DI auftretenden Datensignalbits und die in dem Datensignaleingang DO zugeführten Prüfbits in den Durchlaufspeicher eingeschrieben. Das Einschreiben erfolgt dabei jeweils mit der Vorderflanke eines Impulses der Eingangstaktimpulsfolge SI. Der Durchlaufspeicher verbleibt dabei zunächst in seinem Sperrzustand, d. h. er ist hinsichtlich des Auslesens von Datensignalbits und Prüfbits gesperrt. Dieses Sperren bewirkt der Logisch-l-Pegel der noch immer in ihrem Anfangszustand sich befindenden Kippstufe FF. Diese Kippstufe wird erst bei Auftreten des nächsten Freigabesignals am Zählerausgang Q2 des Zählers Z mit der Vorderflanke des mit diesem Freigabesignal zusammentreffenden Impulses der Ausgangstaktimpulsfolge SO in einen Freigabezustand überführt. In diesem Freigabezustand gibt die Kippstufe einen Logisch-O-Pegel ab. Dier Logisch-O-Pegel bewirkt nunmehr die Freigabe des Durchlaufspeichers FIFO hinsichtlich des Auslesens von Datenbits und Prüfbits.

Bei dem vorliegenden Ausführungsbeispiel ist die verzögerte Freigabe des Durchlaufspeichers FIFO so gewählt, daß zwischen dem Eischreiben eines bestimmten Datensignalbits in den Durchlaufspeicher und dessen Auslesen aus diesem Durchlaufspeicher eine der Dauer des Auftretens von zwei aufeinanderfolgenden Datensignalbits entsprechender zeitlicher Abstand besteht. Diesem zeitlichen Abstand entspricht auch, wie aus den mit Q 3 und AO bezeichneten Impulsfolgen der Figur 2 hervorgeht, die Phasenbeziehung zwischen den parallel zu den Datensignalbits eingelesenen und ausgelesenen Prüfbits.

Solange sich die Phasenbeziehung zwischen den dem Durchlaufspeicher zugeführten Eingangs- und Ausgangstaktimpulsfolgen SI und SO lediglich innerhalb einer vorgegebenen Grenze ändert, verbleibt die Kippstufe FF in ihrem Freigabezustand.Dadurch ist auch der Durchlaufspeicher sowohl für das Einschreiben von Datensignalbits und Prüfbits als auch für deren Auslesen freigegeben. Die Grenze für eine Änderung der Phasenbeziehung ist dabei so festgelegt, daß sich bei dieser gerade eine zeitliche Überlappung von in den Durchlaufspeicher eingelesenen und aus diesem ausgelesenen Prüfbits einstellt. In den Figuren 3 und 4 sind zwei unterschiedliche Fälle für zeitliche Überlappungen dargestellt. Die Figur 3 zeigt dabei den Fall, daß aufgrund eines Voreilens der Eingangstaktimpulse gegenüber den Ausgangstaktimpulsen eine zeitliche Überlappung an der rückwärtigen Flanke eines in den Durchlaufspeicher eingelesenen Prüfbits auftritt. Dagegen geht aus Figur 4 ein zeitliches Überlappen von miteinander verglichenen Prüfbits an der Vorderflanke eines in den Durchlaufspeicher eingelesenen Prüfbits hervor. Dies tritt bei einem Voreilen der Ausgangstaktimpulse gegenüber den Eingangstaktimpulsen auf.

Beide zuletzt genannten Fälle bewirken, daß das zu der genannten Vergleicheranordnung gehörende UND-Glied G2, daß an seinen Eingängen die von dem Zähler Z und dem Durchlaufspeicher FIFO jeweils abgegebenen Prüfbits zugeführt erhält, ein der zeitlichen Überlappung dieser Prüfbits entsprechendes Steuersignal abgibt. Dieses Steuersignal gelangt über das ODER-Glied G3 sowohl an den Steuereingang MR des Durchlaufspeichers als auch an den Rücksetzeingang R der Kippstufe FF. Das am Ausgang dieses ODER-Gliedes auftretende Steuersignal ist in den Figuren 3 und 4 unter der Bezeichnung MR angegeben. Diese Steuersignal bewirkt einerseits das Überführen der Kippstufe FF in deren Sperrzustand (Anfangszustand). Andererseits nimmt auf dieses Steuersignal hin der Durchlaufspeicher FIFO wieder seinen Anfangszustand ein. Zusätzlich wird er, hervorgerufen durch den Sperrzustand der Kippstufe FF, hinsichtlich des Auslesens von Datensignalbits und Prüfbits gesperrt. Hieran schließen sich dann den in der zuvor erläuterten Initialisierungsphase ablaufenden Steuerungsvorgängen entsprechende Steuerungsvorgänge an. D. h. es werden zunächst bis zur erneuten Überführung der Kippstufe FF in deren Freigabezustand lediglich Datensignalbits und Prüfbits in den Durchlaufspeicher FIFO aufgenommen. Dieses Überführen erfolgt dabei wieder bei Auftreten des nächsten, von dem Zähler Z an seinem Ausgang Q2 abgegebenen Freigabesignals mit der Vorderflanke eines zusammen mit diesem Freigabesignal auftretenden Impulse der Ausgangstaktimpulsfolge SO. Wie aus den Figuren 3 und 4 hervorgeht, ist für die beiden betrachteten Fälle die Dauer des Sperrzustandes der Kippstufe FF unterschiedlich. In beiden Fällen wird jedoch zwischen in den Durchlaufspeicher eingeschriebenen und aus diesem ausgelesenen Prüfbits eine Phasenbeziehung erreicht, die zumindest annähernd der in der vorstehend erläuterten Intialisierungsphase festgelegten Phasenbeziehung entspricht.

Vorstehend wurde die vorliegende Erfindung lediglich am Beispiel einer einen Durchlaufspeicher aufweisenden Schaltungsanordnung beschrieben. Die Erfindung setzt jedoch für die Übertragung von Datensignalen das Vorhandensein derartiger Durchlaufspeicher nicht voraus. Vielmehr ist sie allgemein in Speicheranordnungen anwendbar, in welche parallel zu den zu übertragenden Datensignalbits Prüfbits einschreibbar und auslesbar sind und welche für ein solches Einschreiben und Auslesen gesondert ansteuerbar sind.

## Patentansprüche

1. Schaltungsanordnung zum Übertragen von Datensignalen, mit einer Speicheranordnung (FIFO), welche die Datensignale bildende Datensignalbits zu durch das Auftreten von Impulsen einer ersten Taktimpulsfolge festgelegten Einschreibzeitpunkten aufnimmt und welche die Datensignalbits zu durch das Auftreten von Impulsen einer zweiten Taktimpulsfolge festgelegten Auslesezeitpunkten wieder abgibt, und mit einer Überwachungseinrichtung (Z, FF, G1 bis G3) , welche bei Auftreten einer bestimmten Abweichung der Einschreibzeitpunkte für die einzelnen Datensignalbits von den diesen Einschreibzeitpunkten jeweils zugeordneten Auslesezeitpunkten ein Steuersignal für eine solche Änderung der Auslese- bzw. Einschreibzeitpunkte abgibt, daß der gewünschte zeitliche Abstand zwischen diesen Zeitpunkten wieder herbeigeführt wird,
**dadurch gekennzeichnet**, daß die Speicheranordnung und die Überwachungseinrichtung derart ausgestaltet sind, daß die Speicheranordnung (FIFO), gesteuert durch die genannten Impulse der beiden Taktimpulsfolgen, parallel zu den Datensignalbits ein von der Überwachungseinrichtung (Z, FF, G1 bis G3) periodisch wiederholt bereitgestelltes Prüfbit vorgegebenen Binärzustandes aufnimmt und zusammen mit diesen Datensignalbits wieder abgibt,
daß die Überwachungseinrichtung bei ihrer Initialisierung die Abgabe von zuvor in die Speicheranordnung aufgenommenen Datensignalbits und Prüfbits derart verzögert freigibt, daß im Anschluß daran zwischen den in die Speicheranordnung aufgenommenen und abgegebenen Prüfbits eine dem genannten zeitlichen Abstand zwischen den Einlesezeitpunkten und den diesen jeweils zugeordneten Auslesezeitpunkten für Datensignalbits entsprechende Phasenbeziehung besteht,
und daß die Überwachungseinrichtung bei Überschreiten einer bestimmten vorgegebenen Änderung dieser Phasenbeziehung durch Abgabe des genannten Steuersignals ein solches zeitlich begrenztes Sperren der Speicheranordnung hinsichtlich der Abgabe von Datensignalbits und Prüfbits bewirkt, daß sich die gewünschte Phasenbeziehung zwischen aufgenommenen und abgegebenen Prüfbits zumindest annähernd wieder einstellt.

2. Schaltungsanordnung nach Anspruch 1, **dadurch gekennzeichnet**, daß die Überwachungseinrichtung (Z, FF; G1 bis G3) eine Freigabeeinrichtung (Z ,FF, G1) und eine mit dieser verbundene Vergleicheranordnung (G2, G3) aufweist, daß der Freigabeeinrichtung eine mit den Impulsen der ersten Taktimpulsfolge beaufschlagte Zähleranordnung (Z) zugehörig ist, welche an einem ersten Ausgang das genannte Prüfbit und an einem zweiten Ausgang ein zu dem Prüfbit in einer festen Phasenbeziehung stehendes Zählersignal periodisch wiederholt bereitstellt,
daß mit dem zweiten Ausgang der Zähleranordnung eine Kippstufe (FF) verbunden ist, welche bei einer Initialisierung der zugehörigen Überwachungseinrichtung bzw. bei dem genannten Auftreten einer bestimmten Änderung der Phasenbeziehung von Prüfbits auf ein von der Vergleicheranordnung abgegebenes Sperrsignal hin einen das Sperren der Speicheranordnung hinsichtlich des Auslesens von Datensignalbits und Prüfbits bewirkenden Sperrzustand und mit dem erneuten Auftreten des genannten Zahlersignals einen das Auslesen der Speicheranordnung ermöglichenden Freigabezustand einnimmt,
und daß die Vergleicheranordnung einen Verknüpfungsschaltkreis (G2, G3) aufweist, welcher als Eingangssignale die am ersten Ausgang der Zähleranordnung und am Ausgang der Speicheranordnung jeweils auftretendenden Prüfbits und ein die Initialisierung der Überwachungseinrichtung bewirkendes Initialisierungssignal zugeführt erhält und welcher an seinem Ausgang bei einer Initialisierung der Überwachungseinrichtung bzw. bei dem genannten Auftreten einer bestimmten Änderung der Phasenbeziehung von Prüfbits ein entsprechendes Sperrsignal abgibt.

3. Schaltungsanordnung nach Anspruch 2, **dadurch gekennzeichnet**, daß der Speicher als Durchlaufspeicher (FIFO) mit einer Einschreib- und Auslesevorgänge steuernden internen Speichersteueranordnung ausgebildet ist, welcher an Datensignaleingängen (DO, D1) die zu übertragenden Datensignalbits und Prüfbits zugeführt erhält und die Prüfbits über einen die Prüfbits führenden Datensignalausgang (AO) an den genannten Verknüpfungsschaltkreis (G2, G3) abgibt und welcher über gesonderte, der Speichersteueranordnung zugehörige Steuereingänge (MR, OE) mit dem Ausgang des Verknüpfungsschaltkreises (G2, G3) bzw. dem Ausgang der Kippstufe (FF) verbunden ist.

## Claims

1. Circuit arrangement for the transmission of data signals, having a memory arrangement (FIFO) which stores the data signal bits forming the data signals at read-in times determined by the occurrence of pulses of a first clock pulse train and which outputs the data signal bits again at read-out times determined by the occurrence of pulses of a second clock pulse train, and having a monitoring arrangement (Z, FF, G1 to G3) which following the occurrence of a defined deviation of the read-in times for the individual data signal bits from the read-out times assigned to said read-in times in each case outputs a control signal for such a change of the read-out or read-in times respectively so that the desired time interval between said times is restored, characterised
in that the memory arrangement and the monitoring arrangement are designed in such a way that the memory arrangement (FIFO), controlled by the aforesaid pulses of the two clock pulse trains, parallel to the data signal bits, stores a check bit having a predetermined binary state which is provided periodically and repetitively by the monitoring arrangement (Z, FF, G1 to G3) and outputs data signal bits again together therewith, in that during its initialisation, the monitoring arrangement enables the output of data signal bits and check bits previously stored in the memory arrangement delayed in such a way that following this, a phase relationship corresponding to the aforesaid time interval between the read-in times and the read-out times assigned thereto in each case for data signal bits then exists between the check bits stored in the memory arrangement and the check bits output, and in that when a defined predetermined change in said phase relationship is exceeded, by outputting the aforesaid control signal the monitoring arrangement brings about such a time-limited disabling of the memory arrangement with respect to the output of data signal bits and check bits that the desired phase relationship between stored and output check bits is obtained again at least approximately.

2. Circuit arrangement according to Claim 1, characterised in that the monitoring arrangement (Z, FF, G1 to G3) contains an enabling arrangement (Z, FF, G1) and a comparator arrangement (G2, G3) connected thereto, in that belonging to the enabling arrangement is a counting arrangement (Z) which receives the pulses of the first clock pulse train and which periodically and repetitively provides the aforesaid check bit at a first output and a counter signal in a fixed phase relationship to the check bit at a second output, in that there is connected to the second output of the counting arrangement a flip-flop (FF) which during initialisation of the associated monitoring arrangement, or following the aforesaid occurrence of a defined change in the phase relationship of check bits, in response to a disabling signal output by the comparator arrangement assumes a disabled state effecting the disabling of the memory arrangement with respect to the reading out of data signal bits and check bits, and following the renewed occurrence of the aforesaid counter signal assumes an enabled state permitting the reading out from the memory arrangement, and in that the comparator arrangement has a logic circuit (G2, G3) which receives as input signals the check bits occurring at the first output of the counting arrangement and at the output of the memory arrangement in each case, and an initialisation signal effecting the initialisation of the monitoring arrangement, and which outputs at its output a corresponding disabling signal during initialisation of the monitoring arrangement or following the aforesaid occurrence of a defined change in the phase relationship of check bits.

3. Circuit arrangement according to Claim 2, characterised in that the memory is constructed as a transit memory (FIFO) having an internal memory control arrangement controlling read-in and read-out processes which receives at data signal inputs (D0,D1) the data signal bits and check bits to be transmitted and outputs the check bits to the aforesaid logic circuit (G2,G3) via a data signal output (AO) carrying the check bits and which is connected to the output of the logic circuit (G2,G3) or to the output of the flip-flop (FF) via separate control inputs (MR,OE) associated with the memory control arrangement.

## Revendications

1. Montage pour la transmission de signaux de données, comportant un dispositif de mémoire (FIFO), qui reçoit les bits de signaux de données constituant des signaux de données à des instants d'enregistrement qui sont fixés par l'apparition d'impulsions d'une première suite d'impulsions de cadence, et qui libère à nouveau les bits de signaux de données à des instants de lecture qui sont fixés par l'apparition d'impulsions d'une seconde suite d'impulsions de cadence, et comportant un dispositif de contrôle (Z,FF,G1 à G3), qui lors de l'apparition d'un écart déterminé entre les instants d'enregistrement pour les bits individuels de signaux de données et les instants de lecture respectivement associés à ces instants d'enregistrement, délivre un signal de commande pour une modification telle des instants de lecture ou d'enregistrement, que l'intervalle de temps désiré entre ces instants est à nouveau obtenu,
caractérisé par le fait que le dispositif de mémoire et le dispositif de contrôle sont agencés de telle sorte que le dispositif de mémoire (FIFO) reçoit en parallèle avec des bits de signaux de données, un bit de contrôle qui est préparé d'une manière répétée périodiquement par le dispositif de contrôle (Z,FF,G1 à G3) et possède un état binaire prédéterminé, et délivre à nouveau un tel bit de contrôle conjointement avec ces bits de signaux de données, et ce d'une manière commandée par lesdites impulsions des deux suites d'impulsions de cadence,
que lors de son initialisation, le dispositif de contrôle autorise la délivrance de bits de signaux de données et de bits de contrôle, reçus dans le dispositif de mémoire, d'une manière retardée telle qu'ensuite, entre les bits de contrôle reçus dans le dispositif de mémoire et délivrés par ce dernier, il existe une relation de phase qui correspond à ladite distance entre les instants d'enregistrement et les instants de lecture, associés respectivement aux précédents, pour des bits de signaux de données, et
que lors du dépassement d'une variation donnée prédéterminée de cette relation de phase, le dispositif de contrôle réalise, au moyen de la délivrance dudit signal de commande, un blocage limité dans le temps du dispositif de mémoire vis-à-vis de la délivrance de bits de signaux de données et de bits de contrôle, blocage qui est tel que la relation de phase désirée est au moins à nouveau approximativement réglée entre les bits de contrôle reçus et les bits de contrôle délivrés.

2. Montage suivant la revendication 1, caractérisé par le fait que le dispositif de contrôle (Z,FF,G1 à G3) comporte un dispositif de libération (Z,FF,G1) et un dispositif comparateur (G2,G3) raccordé à ce dispositif, que le dispositif de libération comporte un dispositif de comptage (Z) chargé par les impulsions de la première suite d'impulsions de cadence et qui fournit, d'une manière répétée périodiquement, ledit bit de contrôle au niveau d'une première sortie et un signal de comptage lié selon une relation de phase fixe au bit de contrôle, au niveau d'une seconde sortie,
qu'à la seconde sortie du dispositif de comptage est raccordé un étage à bascule (FF), qui, lors d'une initialisation du dispositif de contrôle associé ou dans le cas de ladite apparition d'une modification déterminée de la relation de phase de bits de contrôle lorsqu'intervient un signal de blocage délivré par le dispositif comparateur, passe dans un état de blocage, qui réalise le blocage du dispositif de mémoire vis-à-vis de l'extraction de bits de signaux de données et de bits de contrôle, et, lors de l'apparition renouvelée dudit signal du compteur, passe à un état de libération permettant la lecture du dispositif de mémoire, et que le dispositif comparateur possède un circuit combinatoire (G2, G3), qui reçoit comme signaux d'entrée les bits de contrôle qui apparaissent respectivement à la première sortie du dispositif de comptage et à la sortie du dispositif de mémoire et un signal d'initialisation qui déclenche l'initialisation du dispositif de contrôle, et qui délivre un signal de blocage correspondant à sa sortie lors d'une initialisation du dispositif de contrôle ou lors de ladite apparition d'une modification déterminée de la relation de phase de bits de contrôle.

3. Montage suivant la revendication 2, caractérisé par le fait que la mémoire est agencée en tant que mémoire circulante (FIFO) comportant un dispositif interne de commande de mémoire, qui commande des opérations d'enregistrement et de lecture et reçoit, au niveau d'entrées de signaux de données (D0, D1), les bits de signaux de données et bits de contrôle devant être transmis, et envoie de bits de contrôle, par l'intermédiaire d'une sortie de signaux de données (A0) délivrant les bits de contrôle, audit circuit combinatoire (G2, G3), et est raccordé à la sortie du circuit combinatoire (G2, G3) ou à la sortie de l'étage à bascule (FF), par l'intermédiaire d'entrées particulières de commande (MR, OE), associées au dispositif de commande de mémoire.
